# FASCICULE DE BREVET EUROPEEN

(11) **EP 0 773 706 B1**
(45) Date de publication et mention de la délivrance du brevet: **02.02.2000**
(21) Numéro de dépôt: 96402373.3
(22) Date de dépôt: 07.11.1996
(51) Int. Cl.: H05B 3/86, H05B 3/84

(54) **Vitrage en verre feuilleté pouvant être chauffé électriquement pour automobiles**
Elektrisch beheizbarer Verbundglasscheibe für Kraftfahrzeuge
Electrically heatable laminated window pane for motor vehicles

(30) Priorité: 08.11.1995 DE 19541609
(43) Date de publication de la demande: 14.05.1997
(73) Titulaire: SAINT-GOBAIN VITRAGE, 92400 Courbevoie (FR)
(72) Inventeur: Gillner, Manfred, 52078 Aachen (DE); Pikhard, Siegfried, 52159 Roetgen (DE); Vanaschen, Luc, 4700 Eupen (BE); Triebs, Friedrich, 52076 Aachen (DE); Broring, Karin, Dr., 52072 Aachen (DE)
(74) Mandataire: Muller, René

(56) Documents cités:
- EP-A- 0 025 755
- DE-U- 9 313 394
- US-A- 5 071 692

## Description

La présente invention concerne un vitrage en verre feuilleté pouvant être chauffé électriquement, comprenant une feuille de verre extérieure, une feuille de verre intérieure et une pellicule intermédiaire thermoplastique unie aux feuilles de verre, dans laquelle des conducteurs collecteurs métalliques, servant de conducteurs d'alimentation en courant pour les fils de résistance chauffants où les couches de résistance chauffantes, sont noyés superficiellement du côté adjacent à la feuille de verre intérieure dans la zone marginale, la feuille de verre intérieure étant pourvue sur sa surface libre d'un encadrement décoratif en une encre à cuire opaque, et une couche opaque supplémentaire étant prévue entre le côté extérieur de la feuille de verre extérieure et les conducteurs collecteurs métalliques. La couche opaque supplémentaire correspond du point de vue de la couleur à l'encadrement décoratif disposé sur la surface libre de la feuille de verre intérieure, est disposée entre la pellicule intermédiaire thermoplastique et les conducteurs collecteurs et est unie directement à la surface de la bande de clinquant formant le conducteur collecteur. Un tel vitrage feuilleté est connu du document DE-U- 9 313 394.

Les vitrages en verre feuilleté pouvant être chauffés électriquement, de cette structure, sont utilisés en particulier en tant que pare-brise pouvant être chauffés ou en tant que lunettes arrières pouvant être chauffées dans les automobiles. L'encadrement décoratif disposé sur la feuille de verre intérieure, fait d'une encre à cuire opaque, est nécessaire, lorsque le vitrage est monté dans le véhicule selon la méthode de fixation par collage, qui est généralement courante de nos jours. Puisque les conducteurs collecteurs métalliques, qui sont en règle générale constitués de bandes de clinquant de cuivre étamées et qui sont disposés à une distance de 0,5 à 2 cm des bords du vitrage, se manifestent de manière gênante, vus de l'extérieur, à cause de leur contraste par rapport à l'encadrement décoratif situé derrière eux, ils sont recouverts du côté extérieur d'une couche opaque supplémentaire, de telle sorte qu'ils ne soient pas visibles de l'extérieur. Cette couche opaque appliquée du côté extérieur est disposée dans le cas des vitrages en verre feuilleté connus sur le côté adjacent à la pellicule intermédiaire thermoplastique de la feuille de verre extérieure. Elle est constituée d'une couche d'encre, imprimée sur la surface de verre, pour laquelle il peut s'agir d'une encre à cuire céramique ou d'une encre organique. L'application de cette couche d'encre opaque sur la surface de verre et les mesures nécessaires pour le séchage et/ou la cuisson de la couche d'encre sont associés à des frais de main-d'oeuvre supplémentaires considérables.

L'invention a pour but de former la structure du vitrage en verre feuilleté dans la zone marginale de telle sorte que, d'une part, le procédé de fabrication du vitrage en verre feuilleté soit simplifié, mais que, d'autre part, l'avantage de l'invisibilité des conducteurs collecteurs soit conservé.

Conformément à l'invention, ce but est atteint par le fait que la couche opaque supplémentaire est unique.

Alors qu'il est nécessaire, dans le cas de l'agencement connu de la couche opaque supplémentaire sur la surface de la feuille de verre extérieure, de former la couche opaque comme un ruban relativement large, afin de couvrir les conducteurs collecteurs même dans des positions différentes, la largeur de la couche opaque supplémentaire peut être sensiblement moindre dans le cas de l'invention. Il suffit dans un cas extrême que la couche opaque supplémentaire soit uniquement formée par un revêtement des conducteurs collecteurs. Une forme de réalisation préférée de l'invention réside cependant dans le fait qu'une bande de pellicule opaque mince en un polymère présentant une largeur légèrement supérieure à celle des conducteurs collecteurs est reliée à ceux-ci. Les conducteurs collecteurs peuvent être stratifiés avec une telle bande en feuille, de sorte que des conducteurs collecteurs composites préparés de la sorte peuvent être utilisés pour la fabrication du vitrage chauffant.

Un autre effet avantageux dans le cas du nouvel agencement réside dans le fait que la structure du vitrage en verre feuilleté est plus discrète dans son ensemble. Dans le cas de la disposition connue de la couche opaque supplémentaire sur la feuille de verre extérieure, on voit notamment en observant la zone marginale du vitrage, selon l'angle d'observation, simultanément la couche opaque supplémentaire et l'encadrement décoratif sur la surface extérieure de la feuille de verre intérieure, ce qui donne l'impression d'une structure relativement épaisse du vitrage en verre feuilleté. Par conséquent, l'oeil observe alors cette zone marginale avec une attention particulière. Au contraire, la zone marginale d'un vitrage en verre feuilleté présentant la structure conforme à l'invention paraît plus homogène et moins dérangeant. Cela entraîne qu'on prête moins d'attention à la zone marginale dans le cas de la structure conforme à l'invention, et que, suite à cela, les conducteurs collecteurs ne sont en tant que tels pratiquement pas remarqués, au moins dans le cas d'un coup d'oeil rapide.

D'autres particularités et avantages de l'invention ressortiront des revendications dépendantes et de la description suivante d'un exemple de réalisation préféré basé sur les dessins annexés.

Dans les dessins :
la Fig. 1 montre la structure d'un vitrage en verre feuilleté pouvant être chauffé, selon l'état de la technique, sous la forme d'un segment marginal et dans une vue en perspective écorchée, et
la Fig. 2 montre la structure d'un vitrage en verre feuilleté pouvant être chauffé, conforme à l'invention dans une représentation semblable.

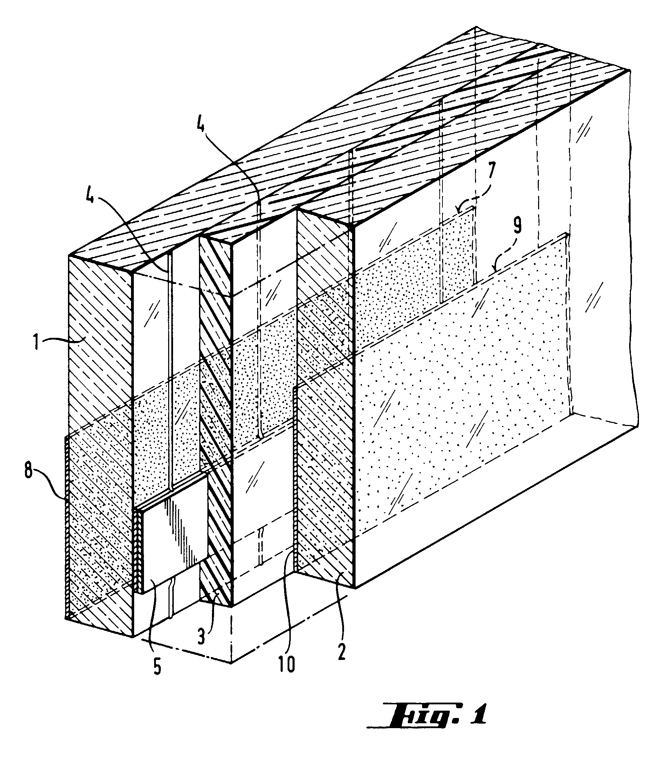

Un vitrage en verre feuilleté pouvant être chauffé pour des automobiles selon l'état de la technique, dont la structure dans la zone marginale apparaît à la Fig. 1, comprend une feuille de verre intérieure 1, c'est-à-dire tournée vers l'habitacle, une feuille de verre extérieure 2 et une pellicule intermédiaire 3 thermoplastique, qui est constituée en règle générale de polyvinylbutyral, reliant ces deux feuilles de verre 1, 2 l'une à l'autre. Dans la pellicule thermoplastique 3, du côté adjacent à la feuille de verre intérieure 1, sont noyées les résistances chauffantes électriques ayant la forme de fils métalliques minces 4. Habituellement, les fils de résistance 4 sont connectés en parallèle et aboutissent à leurs deux extrémités dans des conducteurs collecteurs métalliques 5, qui sont disposés le long de deux bords opposés du vitrage, à faible distance de ceux-ci. Les conducteurs collecteurs 5 sont constitués habituellement de deux bandes de clinquant de cuivre étamées d'un côté, superposées, qui enserrent entre elles les extrémités des fils.

La fabrication d'un tel vitrage en verre feuilleté pouvant être chauffé a lieu de la manière suivante : initialement, les deux feuilles de verre 1 et 2 et la pellicule 3 sont tout d'abord préparées. Ensuite, sur la surface de la pellicule 3, une bande de clinquant de cuivre étamée est déposée et fixée par chauffage local respectivement le long des deux bords concernés. Les fils de résistance 4 sont alors déposés sur la pellicule 3 et sur les bandes de clinquant de cuivre étamées, les fils étant également fixés par application de pression et de chaleur sur la surface de la pellicule. Enfin, une bande de clinquant de cuivre étamée supplémentaire est déposée respectivement sur les bandes de clinquant de cuivre déjà présentes. A l'aide d'un fer à souder, les bandes de clinquant de cuivre respectivement superposées sont brasées l'une à l'autre avec inclusion des extrémités des fils.

La préparation des deux feuilles de verre 1, 2 débute par le fait que les deux feuilles de verre individuelles sont tout d'abord découpées conformément à la forme souhaitée. Un encadrement décoratif 8 en une pâte de sérigraphie propre à être cuite, appropriée, est alors imprimé sur le vitrage 1 par sérigraphie. Les deux feuilles de verre 1 et 2 sont ensuite assemblées et sont bombées ensemble en position horizontale. L'encadrement décoratif imprimé forme dans ce cas la couche supérieure, fond à la température de bombage et forme une couche d'émail opaque. Après l'opération de bombage, les deux feuilles de verre sont séparées l'une de l'autre. Dans une opération d'impression supplémentaire, un encadrement décoratif 10 en une encre d'imprimerie appropriée est alors également imprimé sur le côté concave de la feuille de verre bombée 2. Pour l'encadrement décoratif 10, on utilise cependant de préférence une encre organique, qui durcit à une température inférieure à la température de bombage. Pour durcir cette couche d'encre, une opération de séchage supplémentaire est nécessaire.

Les couches ainsi préparées sont unies l'une à l'autre d'une façon connue dans un autoclave sous l'effet d'un apport de chaleur et de pression. Pour le montage dans la carrosserie du véhicule, le vitrage en verre feuilleté est collé au rebord de fixation de la baie de fenêtre, le cordon de colle étant masqué vers l'extérieur par l'encadrement décoratif 8. Lorsque le vitrage est vu de l'extérieur, les deux couches opaques 8 et 10 sont perçues par l'oeil comme deux couches séparées l'une de l'autre, comme cela apparaît clairement sur la Fig. 1.

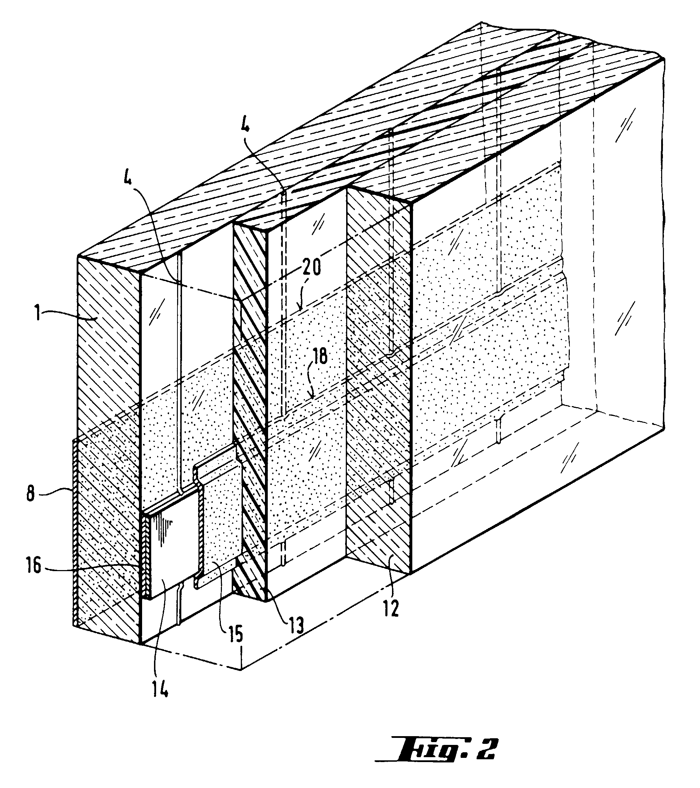

En revanche, la structure conforme à l'invention dans la zone marginale d'un vitrage en verre feuilleté pouvant être chauffé est représentée sur la Fig. 2. La feuille de verre intérieure 1 est formée exactement comme dans le cas du vitrage en verre feuilleté décrit plus haut. La feuille de verre extérieure 12 ne présente par contre aucune couche d'encre opaque, de sorte qu'elle peut directement participer à la suite du traitement après le bombage ensemble avec la feuille de verre 1.

La pellicule intermédiaire 13 est, en principe, également préparée de la même façon que celle décrite à propos de la Fig. 1, des bandes de clinquant de cuivre étant d'abord fixées sur la pellicule 13 pour former les conducteurs collecteurs. Dans ce cas, on utilise cependant des bandes de clinquant de cuivre 14, qui sont unies solidement d'un côté à une bande de pellicule mince 15 en un polymère encré approprié. Lorsque l'encadrement décoratif 8 est constitué d'une couche d'émail noir, en polyimide encré noir par exemple, convient pour la bande de pellicule 15. La bande de pellicule 15 en polyimide est avantageusement un peu plus large que la bande de clinquant de cuivre 14, de sorte que les bords des conducteurs collecteurs sont également ainsi masqués à la vue. La bande de clinquant de cuivre 14 est à nouveau pourvue d'une couche d'étain sur le côté adjacent aux fils chauffants. La bande de pellicule 15 est suffisamment résistante à la chaleur pour supporter sans dommages l'opération de brasage, au moyen de laquelle la deuxième bande de clinquant de cuivre 14 est brasée.

La bande encrée 15 d'une part, se trouve plus près de l'encadrement décoratif 8 et d'autre part, par son bord supérieur 18, elle se trouve à une telle distance en dessous du bord supérieur 20 de l'encadrement décoratif que les couches 8 et 15 ne peuvent être perçues par l'oeil comme des couches séparées que dans le cas d'une observation attentive. Les couleurs de la bande de pellicule 15 et de l'encadrement décoratif 8 peuvent être accordées l'une à l'autre de telle sorte que la bande de pellicule 15, en matière de perception des couleurs, ne se détache pas du tout sur le fond de l'encadrement décoratif 8.

Dans le cas de l'exemple de réalisation décrit, la couche masquant les conducteurs collecteurs est réalisée sous la forme d'une bande de pellicule encrée, qui est habituellement un peu plus large que la bande de clinquant de cuivre à laquelle elle est unie. Cela présente l'avantage particulier que la deuxième bande de clinquant de cuivre 16 ne doit pas être déposée sur la bande de clinquant de cuivre 14 et être fixée à celle-ci avec une grande précision, car même dans le cas de légers décalages latéraux, les bords de la bande de clinquant 16 qui dépassent sont masqués par la bande de pellicule plus large 15. Cependant, lorsque la bande de clinquant de cuivre 16 est déposée avec une grande précision, ou lorsqu'une seule bande de clinquant, à laquelle sont brasés les fils 4, est utilisée, l'invention peut également être réalisée de telle manière que la bande de clinquant soit revêtue sur le côté tourné vers la pellicule intermédiaire 13 d'un vernis approprié qui supporte la température lors de l'opération de brasage ultérieure et dont la teinte est accordée à celle de l'encadrement décoratif 8.

## Revendications

1. Vitrage en verre feuilleté pouvant être chauffé électriquement, comprenant une feuille de verre extérieure (12), une feuille de verre intérieure (1) et une pellicule intermédiaire thermoplastique (13) unie aux feuilles de verre, dans laquelle des conducteurs collecteurs métalliques (14, 16), servant de conducteurs d'alimentation en courant pour les fils de résistance chauffants (4) où les couches de résistance chauffantes, sont noyés superficiellement du côté adjacent à la feuille de verre intérieure (1) dans la zone marginale, la feuille de verre intérieure (1) étant pourvue sur sa surface libre d'un encadrement décoratif (8) en une encre à cuire opaque, et une couche opaque supplémentaire (15) étant prévue entre le côté extérieur de la feuille de verre extérieure (12) et les conducteurs collecteurs métalliques (14, 16), la couche opaque supplémentaire (15) correspondant du point de vue de la couleur à l'encadrement décoratif (8) disposé sur la surface libre de la feuille de verre intérieure (1), et étant disposée entre la pellicule intermédiaire thermoplastique (13) et les conducteurs collecteurs (14, 16) et unie directement à la surface de la bande de clinquant (14) formant le conducteur collecteur, ***caractérisé en ce que*** la couche opaque supplémentaire (15) est unique.

2. Vitrage en verre feuilleté pouvant être chauffé électriquement selon la revendication 1, ***caractérisé en ce que*** la couche opaque supplémentaire (15) est une couche d'émail ou d'encre appliquée à la bande de clinquant (14) formant le conducteur collecteur.

3. Vitrage en verre feuilleté pouvant être chauffé électriquement selon la revendication 1, ***caractérisé en ce que*** la couche opaque supplémentaire est une bande de pellicule (15) en un polymère encré unie à la bande de clinquant (14) formant le conducteur collecteur.

4. Vitrage en verre feuilleté pouvant être chauffé électriquement selon la revendication 3, ***caractérisé en ce que*** la bande de pellicule (15) est constituée d'un polymère résistant à la température lors de l'opération de brasage, en particulier en polyimide.

5. Vitrage en verre feuilleté pouvant être chauffé électriquement selon la revendication 3 ou 4, ***caractérisé en ce que*** la bande de pellicule (15) présente une largeur légèrement supérieure à la bande de clinquant (14) formant le conducteur collecteur qui est unie à la bande de pellicule (15).

6. Vitrage en verre feuilleté pouvant être chauffé électriquement selon l'une quelconque des revendications 1 à 5, ***caractérisé en ce que*** les dimensions en largeur des bandes de clinquant (14, 16) formant les conducteurs collecteurs et de la bande de pellicule (15) sont sensiblement inférieures à la dimension en largeur de l'encadrement décoratif (8), et en ce que le conducteur collecteur et la bande de pellicule (15) sont disposés décalés vers le bord périphérique de la feuille de verre (1) par rapport au bord intérieur (20) de l'encadrement décoratif (8).

## Patentansprüche

1. Elektrisch beheizbare Verbundglasscheibe, mit einer äußeren Glasscheibe (12), einer inneren Glasscheibe (1) und einer mit den Glasscheiben verbundenen thermoplastischen Zwischenfolie (13), in deren an der inneren Glasscheibe anliegenden Seite metallische Sammelschienen (14, 16) als Stromzuführungsleiter zu Heizwiderstandsdrähten (4) oder Heizwiderstandsschichten oberflächlich im Randbereich eingebettet sind, wobei die innere Glasscheibe (1) auf ihrer freien Oberfläche mit einem Dekorrahmen (8) aus einer lichtundurchlässigen Einbrennfarbe versehen und zwischen der Außenseite der äußeren Glasscheibe (12) und den metallischen Sammelschienen (14, 16) eine weitere lichtundurchlässige Schicht (15) vorgesehen ist, wobei die weitere lichtundurchlässige Schicht (15) farblich dem auf der freien Oberfläche der inneren Glasscheibe (1) angeordneten Dekorrahmen (8) entspricht und zwischen der thermoplastischen Zwischenfolie (13) und den Sammelschienen (14,16) angeordnet und unmittelbar mit der Oberfläche des die Sammelschiene bildenden Metallfolienstreifens (14) verbunden ist, **dadurch gekennzeichnet**, daß die weitere lichtundurchlässige Schicht (15) einlagig ist.

2. Elektrisch beheizbare Verbundglasscheibe nach Anspruch 1, **dadurch gekennzeichnet,** daß die weitere lichtundurchlässige Schicht (15) eine auf dem die Sammelschiene bildenden Metallfolienstreifen aufgebrachte Farb- oder Lackschicht ist.

3. Elektrisch beheizbare Verbundglasscheibe nach Anspruch 1, **dadurch gekennzeichnet**, daß die weitere lichtundurchlässige Schicht (15) ein mit dem die Sammelschiene bildenden Metallfolienstreifen (14) verbundener Folienstreifen (15) aus einem eingefärbten Polymer ist.

4. Elektrisch beheizbare Verbundglasscheibe nach Anspruch 3, **dadurch gekennzeichnet**, daß der Folienstreifen (15) aus einem gegenüber der Temperatur beim Lötvorgang beständigen Polymer, insbesondere aus einem Polyimid, besteht.

5. Elektrisch beheizbare Verbundglasscheibe nach Anspruch 3 oder 4, **dadurch gekennzeichnet,** daß der Folienstreifen (15) eine geringfügig größere Breite aufweist als der mit dem Folienstreifen (15) verbundene die Sammelschiene bildende Metallfolienstreifen (14).

6. Elektrisch beheizbare Verbundglasscheibe nach einem der Ansprüche 1 bis 5, **dadurch gekennzeichnet,** daß die Breitenabmessung der die Sammelschiene bildenden Metallfolienstreifen (14,16) und des Folienstreifens (15) wesentlich geringer sind als die Breitenabmessung des Dekorrahmens (8), und daß die Sammelschiene und der Folienstreifen (15) bezogen auf die Innenkante (20) des Dekorrahmens (8) zur Umfangskante der Glasscheibe (1) hin versetzt angeordnet sind.

## Claims

1. Laminated glass glazing which can be electrically heated, comprising an outer glass sheet (12), an inner glass sheet (1) and an intermediate thermoplastic film (13) joined to the glass sheets, in which metal collector conductors (14, 16) serving as current supply conductors for heating resistance wires (4) where the heating resistance layers are surface-embedded on the side adjacent to the inner glass sheet (1) in the marginal area, the inner glass sheet (1) being provided on its free surface with a decorative frame (8) of an opaque baking ink, and a supplementary opaque layer (15) is provided between the outside of the outer glass sheet (12) and the metal collector conductors (14, 16), the supplementary opaque layer (15) corresponding from the colour standpoint to the decorative frame (8) placed on the free surface of the inner glass sheet (1) and being positioned between the intermediate thermoplastic film (13) and the collector conductors (14, 16) and being joined directly to the surface of the foil strip (14) forming the collector conductor, characterized in that there is a single supplementary opaque layer (15).

2. Laminated glass glazing which can be electrically heated according to claim 1, characterized in that the supplementary opaque layer (15) is an ink or enamel layer applied to the foil strip (14) forming the collector conductor.

3. Laminated glass glazing which can be electrically heated according to claim 1, characterized in that the supplementary opaque layer is a film strip (15) of an inked polymer joined to the foil strip (14) forming the collector conductor.

4. Laminated glass glazing which can be electrically heated according to claim 3, characterized in that the film strip (15) is constituted by a polymer resisting the heat during the brazing operation, particularly of polyimide.

5. Laminated glass glazing which can be electrically heated according to claim 3 or 4, characterized in that the film strip (15) has a width slightly greater than the foil strip (14) forming the collector conductor and which is joined to the film strip (15).

6. Laminated glass glazing which can be electrically heated according to any one of the claims 1 to 5, characterized in that the width dimensions of the foil strips (14, 16) forming the collector conductors and the film strip (15) are significantly smaller than the width dimension of the decorative frame (5) and in that the collector conductor and film strip (15) are displaced towards the peripheral edge of the glass sheet (1) with respect to the inner edge (20) of the decorative frame (8).
